# EUROPÄISCHE PATENTSCHRIFT

(11) **EP 3 772 048 B1**
(45) Veröffentlichungstag und Bekanntmachung des Hinweises auf die Patenterteilung: **16.06.2021**
(21) Anmeldenummer: 19189369.2
(22) Anmeldetag: 31.07.2019
(51) Int. Cl.: G08B 31/00, G05D 16/20, H05K 7/00

(54) **ÜBERDRUCKKAPSELUNG**
OVERPRESSURE ENCAPSULATION
ENVELOPPE À SURPRESSION

(43) Veröffentlichungstag der Anmeldung: 03.02.2021
(73) Patentinhaber: Siemens Aktiengesellschaft, 80333 München (DE)
(72) Erfinder: Strauch, Piotr, 76761 Rülzheim (DE)

(56) Entgegenhaltungen:
- DE-C1- 19 831 764
- GB-A- 2 551 172
- US-A1- 2006 071 800

## Beschreibung

Die Erfindung betrifft eine Überdruckkapselung mit einem Gehäuse, welches über einen Spülgaseinlass an einer Spülgasquelle angeschlossen ist, mit einem zwischen der Spülgasquelle und dem Spülgaseinlass angeordneten Einlassventil, mit einem den Innendruck in dem Gehäuse überwachenden Druckmesser oder Druckwächter und mit einer Steuereinrichtung, die dazu ausgebildet ist, das Einlassventil zur Einhaltung eines Soll-Innendrucks in dem Gehäuse zu steuern.

Eine derartige Überdruckkapselung ist aus der DE 198 31 764 C1 bekannt.

Die bekannte Überdruckkapselung und ähnliche aus der DE 44 18 158 C2, DE 103 13 203 A1, EP 2 124 304 B1 oder der WO 2017/084743 A1 bekannte Überdruckkapselungen dienen dazu, ein nicht explosionsgeschütztes Gerät in einem explosionsgefährdeten Bereich zu betreiben. Das überdruckgekapselte Gehäuse wird mit dem Spülgas durchspült, um ein eventuell darin vorhandenes explosionsfähiges Gas-Luftgemisch zu entfernen bzw. bis zu einer ungefährlichen Konzentration zu verdünnen.

Bei den bekannten Überdruckkapselungen wird im laufenden Betrieb so viel Spülgas in das Gehäuse eingeleitet, wie durch natürliche Leckage aus dem Gehäuse entweicht. Dabei kann eine definierte ungeregelte Auslassstelle vorgesehen werden, um eine ständige Spülung mit einer Mindest-Spülgasmenge zu erzwingen. Der Innendruck in dem Gehäuse wird gegen Außendruck überwacht und die Spülgaszufuhr über ein Einlassventil (z. B. Proportionalventil) am Spülgaseinlass des Gehäuses oder der Spülgasabfluss über ein Auslassventil an einem Spülgasauslass derart gesteuert, dass in dem Gehäuse ein Mindest-Innendruck aufrechterhalten wird. Fällt der Innendruck unter einen Schwellenwert, so wird ein Alarm ausgelöst und z. B. das nicht explosionsgeschütztes Gerät abgeschaltet.

Vor der Inbetriebnahme muss das Gehäuse mit einer vorgeschriebenen mehrfachen Menge seines Volumens gespült werden, um Reste von zündfähigen Gasen zu beseitigen. Dazu kann während des Spülvorgangs bei einem geöffneten Auslassventil am Spülgasauslass mittels eines dort vorgesehenen Durchflussmessers laufend die das Gehäuse verlassende Spülgasmenge gemessen werden, wobei eine Steuereinrichtung den Spülvorgang durch Schließen des Auslassventils beendet, wenn die gemessene Spülgasmenge den vorgeschriebenen Wert erreicht. Mittels eines Druckmessers wird laufend der Innendruck in dem Gehäuse erfasst, wobei die Steuereinrichtung das Einlassventil am Spülgaseinlass im Sinne einer Konstanthaltung des Innendrucks im Gehäuse betätigt. Anstelle eines Durchflussmessers kann auch ein Durchflusswächter vorgesehen werden, der den Spülgasabfluss auf Über- oder Unterschreiten mindestens eines vorgegebenen Schwellenwertes überwacht und entsprechend das Ventil am Spülgaseinlass steuert. Die geforderte Mindest-Spülgasmenge bei der Spülung des Gehäuses kann auch dadurch sichergestellt werden, dass der Durchflusswächter den Spülgasabfluss auf Überschreiten eines Durchfluss-Schwellenwerts überwacht und bei einer Überschreitung des Schwellenwerts ein Zeitrelais startet, welches nach Ablauf einer vorgegebenen Spülzeit den Spülvorgang durch Schließen des Ventils am Spülgasauslass beendet. Die Spülgasmenge entspricht dann mindestens dem Produkt aus dem Durchfluss-Schwellenwert und der Spülzeit.

Aus der oben erwähnten der WO 2017/084743 A1 ist es bekannt, aus dem zeitlichen Verlauf des gemessenen Innendrucks oder des Spülgasabflusses am Spülgasauslass des Gehäuses einen statistischen Trend und weiterhin eine Restlaufzeit zu berechnen, bis die Trendkurve einen vorgegebenen Grenzwert über- oder unterschreitet. Auf diese Weise kann bei einer über die natürliche Leckage hinausgehenden fehler- oder verschleißbedingten Leckage frühzeitig erkannt werden, wann diese zu einem Systemausfall führt, damit dann rechtzeitig und zeitlich geplant Wartungsmaßnahmen durchgeführt werden können. Weiterhin können anhand des zeitlichen Verlaufs verschiedene Fehlerfälle erkannt und durch Vergleich mit bekannten fehlertypischen Formen des zeitlichen Verlaufs unterschieden werden.

Die in der WO 2017/084743 A1 beschriebene Trendüberwachung hat jedoch den Nachteil, dass sie einen ständigen Spülgasabfluss über den Spülgasauslass oder einen im Normalfall vergleichsweise hohen Innendruck in dem Gehäuse voraussetzt, was beides zu einem hohen Spülgasverbrauch führt. Kommt es in dem überdruckgekapselten Gehäuse zu eine innere Freisetzung von Gasen, aus z. B. aus durchgeleiteten gasführenden Verrohrungen oder Verbindungen, kann dies die am Auslass überwachten Spülgasmengen verfälschen.

Aus der US 2006/071800 A1 ist ein Stellungsregler für ein Ventil bekannt, der zu Überwachung des Ventilzustandes einen oder mehrere Sensoren enthält. Die Sensoren können von dem Ventil unterschiedliche Zustandsinformationen wie Position, angelegter Druck, Temperatur, Emissionen, Zyklen usw. erfassen. Die nicht weiter spezifizierten Emissionen können auf die Durchflussrate, die Menge der durch das Ventil freigesetzten Substanz oder Eigenschaften der freigesetzten Substanz, wie z. B. ihre chemische Zusammensetzung, hinweisen. Die erhaltenen Zustandsinformationen werden in einer Auswerteeinrichtung ausgewertet und gespeichert, um mittels eines Vorhersagemodells Vorhersagen in Bezug auf Fehler zu treffen und ein Warnsignal basierend auf diesen Vorhersagen zu erzeugen.

Gemäß der Erfindung wird das oben in Verbindung mit der WO 2017/084743 A1 angegebene Problem durch die in Anspruch 1 definierte Überdruckkapselung gelöst, von der vorteilhafte Weiterbildungen in den Unteransprüchen angegeben sind.

Gegenstand der Erfindung ist somit eine Überdruckkapselung mit einem Gehäuse, welches über einen Spülgaseinlass an einer Spülgasquelle angeschlossen ist, mit einem zwischen der Spülgasquelle und dem Spülgaseinlass angeordneten Einlassventil, mit einem den Innendruck in dem Gehäuse überwachenden Druckmesser oder Druckwächter und mit einer Steuereinrichtung, die dazu ausgebildet ist, das Einlassventil zur Einhaltung eines Soll-Innendrucks in dem Gehäuse zu steuern, gekennzeichnet durch einen den Spülgaszufluss erfassenden Durchflussmesser zwischen der Spülgasquelle und dem Spülgaseinlass und eine Auswerteeinrichtung, die eine Trendkurve des Spülgaszuflusses und einen Zeitpunkt vorausberechnet, wenn die Trendkurve einen Schwellenwert überschreitet.

Der Spülgaszufluss wird über das Einlassventil in Abhängigkeit von dem Innendruck (gegen Außendruck) im Gehäuse geregelt, so dass ein Soll-Innendruck aufrechterhalten wird. Der Soll-Innendruck muss nicht notwendigerweise einem einzigen Sollwert entsprechen; es kann sich auch um zwei Grenzwerte handeln, zwischen denen der Innendruck liegen muss. Bei einer beginnenden und zunehmenden Leckage steigt dann der zur Aufrechterhaltung des Innendrucks benötigte Spülgaszufluss. Die Änderung des Spülgaszuflusses wird daraufhin ausgewertet, ob ein Trend vorliegt. Durch Extrapolation über den ermittelten Trend hinaus wird eine Vorhersage getroffen, wann der Spülgaszufluss einen vorgebbaren Schwellenwert überschreiten wird. Je nachdem, ob der Zeitpunkt für eine Vorwarnung, eine außerplanmäßige Wartungsmaßnahme oder für den Ausfall der Überdruckkapselung vorhergesagt werden soll, kann der Schwellenwert unterschiedlich gewählt werden. Es können auch zwei oder mehr unterschiedliche Schwellenwerte vorgesehen werden, um das Eintreten der jeweiligen genannten Ereignisse vorherzusagen.

Der vorhergesagte Zeitpunkt bzw. die vorhergesagten Zeitpunkte können vor Ort angezeigt und/oder an eine entfernte Stelle übertragen und dort angezeigt werden. Dies gilt vorzugsweise auch für eine von der Auswerteeinrichtung laufend ermittelte Restlaufzeit bis zum Eintritt des jeweiligen Ereignisses. Die Übertragung an die entfernte Stelle kann drahtgebunden beispielsweise unter Verwendung von Ethernet, USB oder Kabel, usw. oder drahtlos, beispielsweise unter Nutzung von WLAN, WiFi, Bluetooth, Infrarot oder eines Mobilfunkstandards wie beispielsweise LTE, UMTS, GSM, usw. erfolgen. Die Übertragung kann beispielsweise in Form einer E-Mail, SMS, App, usw. erfolgen. Bei der entfernten Stelle kann es sich im Falle von langreichweitigen Funkverbindungen um einen Server oder eine Cloud und im Falle von kurzreichweitigen Funkverbindungen um Smartphones, Tabletcomputer, Laptops oder andere geeignete Consumergeräte handeln.

Die Auswerteeinrichtung kann den Spülgaszufluss entweder kontinuierlich oder diskontinuierlich in aufeinanderfolgenden Zeitabständen jeweils für eine vorgegebene Messdauer (Messintervall) ermitteln. Letzteres ist insbesondere dann von Vorteil, wenn für Erfassung des Spülgaszuflusses durch den Durchflussmesser und die Auswertung nur wenig Energie zur Verfügung steht. Dies kann z. B. dann der Fall sein, wenn die Auswerteeinrichtung, allein oder zusammen mit dem Durchflussmesser, als separates Gerät ausgebildet ist, dessen Energiebedarf durch eine interne Batterie, eine Fotozelle o. dgl. gedeckt wird. Während der Messdauer können die Messwerte des Spülgaszuflusses aufsummiert werden, um einen auf die Messdauer bezogenen Wert (z. B. einen Summenwert oder einen Mittelwert) des Spülgaszuflusses zu erhalten. Aus den in den aufeinanderfolgenden Zeitabständen erhaltenen Summenwerten oder Mittelwerten kann dann die Trendkurve des Spülgaszuflusses berechnet werden. Zwischen den Messintervallen können der Durchflussmesser und die Auswerteeinrichtung in einem Sleep-Modus sein, in dem nahezu keine Energie verbraucht wird. Es ist im Rahme der Erfindung auch möglich, die Auswertung in Form der Berechnung der Trendkurve des Spülgaszuflusses und der Vorhersage, wann der Spülgaszufluss einen vorgebbaren Schwellenwert überschreiten wird, an einer entfernten Stelle erfolgt und dass zu diesem Zwecke die Werte des gemessenen Spülgaszuflusses jeweils mit aktuellen Zeitstempel versehen an die entfernte Stelle übertragen werden. Schließlich kann die Auswerteeinrichtung kann natürlich in der Steuereinrichtung der Überdruckkapselung integriert sein.

Um das Gehäuse der Überdruckkapselung vor der Inbetriebnahme oder nach größeren Störungen mit einer geforderten Mindest-Spülgasmenge spülen zu können, kann es einen Spülgasauslass mit einem Auslassventil aufweisen, welches im Normalbetrieb geschlossen und nur während des Spülvorgangs geöffnet ist. Da die mit dem Spülen des Gehäuses verbundenen erhöhten Spülgasverbräuche die Ermittlung des Trends des Spülgaszuflusses verfälschen können, kann die Auswerteeinrichtung in vorteilhafter Weise dazu ausgebildet sein, nur den bei geschlossenem Auslassventil von dem Durchflussmesser erfassten Spülgaszufluss für die Ermittlung des Trends heranzuziehen.

Soweit die Überdruckkapselung über einen weiteren Durchflussmesser verfügt, der die das Gehäuse über einen Spülgasauslass verlassende Spülgasmenge misst, kann auch die Differenz zwischen dem Spülgaszufluss und der über den Spülgasauslass ausströmenden Spülgasmenge erfasst werden. Diese Differenz entspricht unmittelbar dem Spülgasverlust durch Leckage.

Im Weiteren wird die Erfindung anhand von Ausführungsbeispielen und unter Bezugnahme auf die Figuren der Zeichnung erläutert; im Einzelnen zeigen:
- Fig. 1: ein erstes Ausführungsbeispiel der erfindungsgemäßen Überdruckkapselung,
- Fig. 2: ein zweites Ausführungsbeispiel der erfindungsgemäßen Überdruckkapselung,
- Fig. 3: ein Beispiel für den zeitlichen Verlauf des Spülgaszuflusses bei einer zunehmenden Leckage der Überdruckkapselung und
- Fig. 4: ein Beispiel für die Ermittlung eines Trends des Spülgaszuflusses.

Gleiche Bezugszeichen haben in den verschiedenen Figuren die gleiche Bedeutung. Die Darstellungen sind rein schematisch und repräsentieren keine Größenverhältnisse.

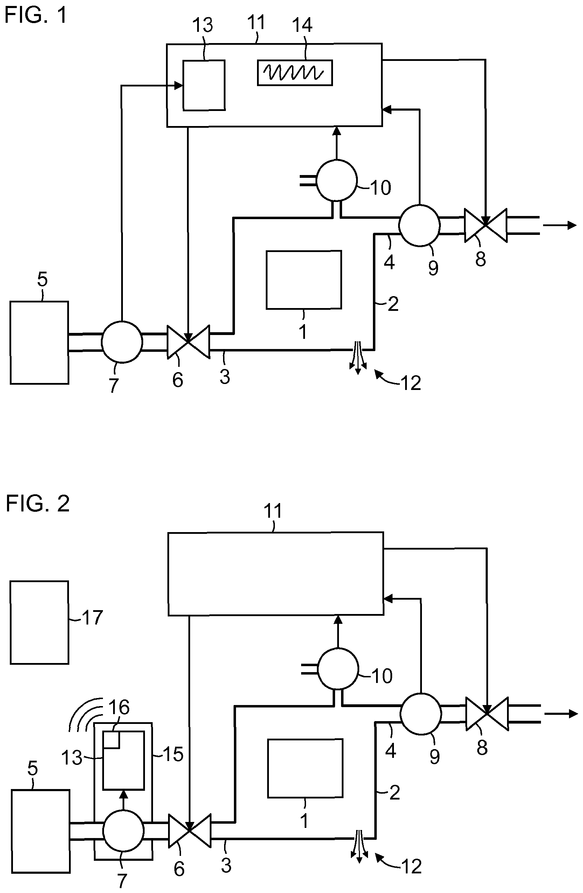

Fig. 1 zeigt nicht explosionsgeschütztes Betriebsmittel 1, beispielsweise ein elektrisches Gerät 1, das in einem Gehäuse 2 angeordnet ist. Unter dem Begriff Gehäuse ist auch ein Schaltschrank o. dgl. zu verstehen. Das Gehäuse 2 ist mit einem Spülgaseinlass 3 und einem Spülgasauslass 4 versehen und über den Spülgaseinlass 3 an einer Spülgasquelle 5 angeschlossen. In dem Spülgaseinlass 3 sind ein steuerbares Einlassventil 6 und ein Durchflussmesser 7 angeordnet. In dem Spülgasauslass 4 sind ein steuerbares Auslassventil 8 und ggf. ein weiterer Durchflussmesser oder Durchflusswächter 9 angeordnet. Bei dem Einlassventil 6 kann es sich um ein Proportionalventil und bei dem Auslassventil 8 um ein Absperrventil handeln. Ein Druckmesser 10 erfasst den Innendruck in dem Gehäuse 2 gegenüber dem Umgebungsdruck der Atmosphäre. Das Einlassventil 6, der Durchflussmesser 7, das Auslassventil 8, der Druckmesser 10 und der ggf. vorhandene weitere Durchflussmesser oder -wächter 9 sind an einer Steuereinrichtung 11 angeschlossen.

Vor der Inbetriebnahme des Gerätes 1 muss das Gehäuse 2 mit einer vorgegebenen mehrfachen Menge seines Volumens gespült werden, um Reste von zündfähigen Gasen zu beseitigen. Dazu öffnet die Steuereinrichtung 11 das Absperrventil 8, so dass Spülgas aus der Spülgasquelle 5 über den Spülgaseinlass 3 in das Innere des Gehäuses 2 gelangen und nach Durchströmen des Gehäuses 2 dieses über den Spülgasauslass 4 wieder verlassen kann. Der Durchflussmesser oder -wächter 9 misst bzw. überwacht während der Spülphase die das Gehäuse 2 über den Spülgasauslass 4 verlassende Spülgasmenge, wobei die Steuereinrichtung 11 den Spülvorgang durch Schließen des Auslassventils 8 beendet, wenn die gemessene Spülgasmenge den vorgeschriebenen Wert erreicht oder wenn eine vorgegebene Spülzeit abgelaufen ist innerhalb derer der Spülgasabfluss einen Mindestwert nicht unterschritten hat.

Während des Betriebs des elektrischen Geräts 1 wird in dem Inneren des Gehäuses 2 ein ständiger Überdruck gegenüber der Atmosphäre aufrechterhalten, um zu vermeiden, dass Gase aus der Atmosphäre in das Gehäuse 2 und das Gerät 1 gelangen. Wenn es sich bei dem Gerät 1 beispielsweise um einen Gasanalysator handelt, kann der Überdruck in dem Gehäuse 2 weiterhin derart eingestellt werden, dass er auch größer als der Druck in den gasführenden Teilen des Gasanalysators ist, so dass kein Gas aus dem Gasanalysator in das Gehäuse 2 gelangt. Der Überdruck wird mit Hilfe des Druckmessers 10 auf Einhaltung eines Solldruckes überwacht, wobei im Falle eines Druckverlusts durch natürliche oder vorhergesehene Leckage 12 die Steuereinrichtung 11 das Einlassventil 6 öffnet, um das unter Druck stehende Spülgas aus der Spülgasquelle 5 in das Gehäuse 2 einzulassen. Der Druckmesser 10 kann außerdem dazu dienen, den Innendruck in dem Gehäuse 2 gegenüber dem Umgebungsdruck der Atmosphäre daraufhin zu überwachen, dass ein vorgegebener Maximaldruck nicht überschritten wird. Wird der Maximaldruck erreicht, so kann der Innendruck in dem Gehäuse 2 durch Öffnen des Auslassventils 8 verringert werden, um so Beschädigungen des Gehäuses 2 oder Teilen davon zu vermeiden.

Der Durchflussmesser 7 erfasst den Durchfluss der zugeführten Spülgases (Spülgaszufluss) in das Gehäuse 2 der Überdruckkapselung. Eine Auswerteeinrichtung 13, die hier in der Steuereinrichtung 11 integriert ist, berechnet im Falle einer beginnenden und zunehmenden Leckage 12 aus dem aktuell und in der Vergangenheit erfassten Spülgaszufluss eine Trendkurve und den Zeitpunkt und die verbleibende Dauer, bis die Trendkurve einen vorgegebenen Schwellenwert überschreitet. Der Zeitpunkt bzw. die verbleibende Dauer (Restlaufzeit bis zur Überschreitung des Schwellenwertes) werden auf einer Anzeige 14 der Steuereinrichtung 11 ausgegeben.

Das in Fig. 2 gezeigte Ausführungsbeispiel unterscheidet sich von dem nach Fig. 1 dadurch, dass die Auswerteeinrichtung 13, hier z. B. zusammen mit dem Durchflussmesser 7, als eigenständiges, insbesondere aus einer eigenen Energiequelle wie eine Batterie, Solarzelle usw. stromversorgtes, Gerät 15 ausgebildet ist. Die Auswerteeinrichtung 13 verfügt über eine Funkschnittstelle 16, um den Zeitpunkt und die Restlaufzeit, bis die berechnete Trendkurve den vorgegebenen Schwellenwert überschreitet, an eine entfernte Stelle 17 zu übertragen.

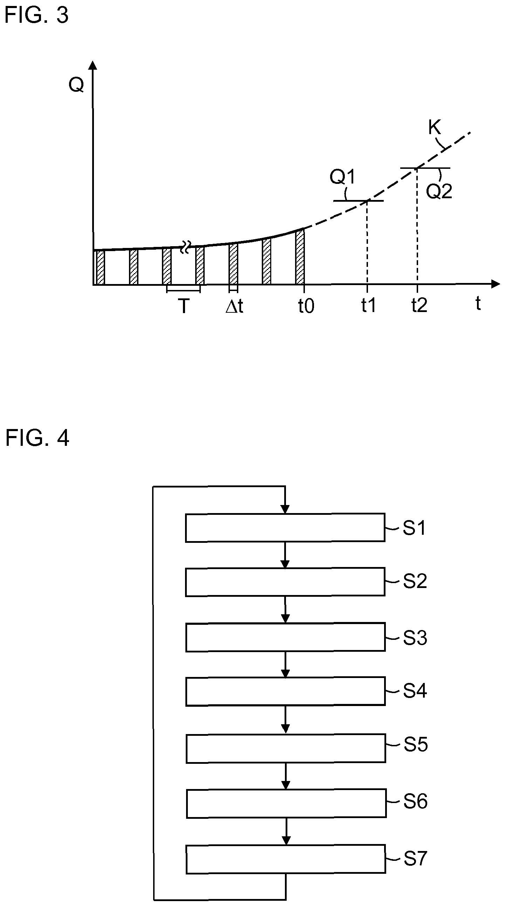

Fig. 3 zeigt beispielhaft und sehr vereinfacht den Verlauf der Spülgaszufuhr Q über die Zeit t bis zu einem aktuellen Zeitpunkt t0 und eine darüber hinaus extrapolierte Trendkurve K aus dem aktuellen Wert und vergangenen Werten des Spülgaszufluss Q berechnet wird. Diese Berechnung kann kontinuierlich oder, wie hier gezeigt, diskontinuierlich in aufeinanderfolgenden Zeitabständen T jeweils für eine vorgegebene Messdauer (Messintervall) Δt erfolgen, um den Energiebedarf für die Durchflussmessung und Auswertung der erhaltenen Messwerte gering zu halten. Zwischen den Messintervallen Δt können der Durchflussmesser 7 und die Auswerteeinrichtung 13 in einem Sleep-Modus sein, in dem nahezu keine Energie verbraucht wird. Die Messwerte können durch gleitende Mittelung oder ein sonstiges Filterverfahren geglättet werden. Sie können auch innerhalb jedes Messintervall Δt zu einem auf die Messdauer Δt bezogenen Wert, z. B. einem Summen- oder Mittelwert, aufsummiert werden. Aus den in den aufeinanderfolgenden Zeitabständen T erhaltenen Summen- oder Mittelwerten kann dann die Trendkurve K des Spülgaszuflusses berechnet werden.

Weiterhin werden ein erster Zeitpunkt t1 und ein zweiter Zeitpunkt t2 berechnet, an denen die Trendkurve K einen ersten Schwellenwert Q1 bzw. einen zweiten höheren Schwellenwert Q2 überschreitet. Der niedrigere Schwellenwert Q1 ist im Hinblick daraufhin gewählt, dass bei seinem Überschreiten eine Wartungsmaßnahme fällig wird, während das Überschreiten des höheren Schwellenwertes Q2 den Ausfall der Überdruckkapselung anzeigt, was ein Abschalten der nicht explosionsgeschützten Betriebsmittel 1 notwendig macht. Die jeweils aktuell berechneten Zeitpunkte t1 und t2 für die voraussichtliche Überschreitung der Schwellenwerte Q1, Q2 und/oder die Restlaufzeiten t1-t0 und t2-t0 bis zur Überschreitung der Schwellenwerte Q1, Q2 werden über die Funkschnittstelle 16 an die entfernte Stelle 17 übertragen. Bei der entfernten Stelle kann es sich im Falle von langreichweitigen Funkverbindungen um einen Server oder eine Cloud und im Falle von kurzreichweitigen Funkverbindungen um Smartphones, Tabletcomputer, Laptops oder andere geeignete Consumergeräte handeln.

Die Berechnung der Trendkurve K, und der Zeitpunkte t1, t2 bzw. Restlaufzeiten t1-t0 und t2-t0 bis zur Überschreitung der Schwellenwerte Q1, Q2 kann auch an der entfernten Stelle 17 erfolgen. In diesem Falle werden die auf die Messdauer Δt bezogenen Summen- oder Mittelwerte des gemessenen Spülgaszuflusses Q an die entfernten Stelle 17 übertragen.

Fig. 4 veranschaulicht in einem Flussdiagramm beispielhaft und vereinfacht die Ermittlung der Trendkurve K und der Zeitpunkte t1, t2 für die Schwellenwertüberschreitungen:
S1: Messen des Spülgaszuflusses Q innerhalb des Messintervalls Δt;
S2: Bilden eines Mittelwerts des innerhalb des Messintervalls Δt gemessenen Spülgaszuflusses Q;
S3: Speichern des Mittelwertes;
S4: Berechnen der Trendkurve K aus allen oder einer vorgegebenen Anzahl von zuletzt gespeicherten Mittelwerten;
S5: Berechnen der Zeitpunkte t1, t2, zu denen die Trendkurve K die vorgegebenen Schwellenwerte Q1, Q2 überschreitet;
S6: Anzeige und/oder Übermittlung der berechneten Zeitpunkte t1, t2 und/oder der aktuellen Restlaufzeiten bis zu diesen Zeitpunkten;
S7: Nach einem Zeitabstand T Fortsetzung mit Schritt S1.

## Patentansprüche

1. Überdruckkapselung mit einem Gehäuse (2), welches über einen Spülgaseinlass (3) an einer Spülgasquelle (5) angeschlossen ist, mit einem zwischen der Spülgasquelle (5) und dem Spülgaseinlass (3) angeordneten Einlassventil (6), mit einem den Innendruck in dem Gehäuse (2) überwachenden Druckmesser oder Druckwächter (10) und mit einer Steuereinrichtung (11), die dazu ausgebildet ist, das Einlassventil (6) zur Einhaltung eines Soll-Innendrucks in dem Gehäuse (2) zu steuern, **gekennzeichnet durch** einen den Spülgaszufluss (Q) erfassenden Durchflussmesser (7) zwischen der Spülgasquelle (5) und dem Spülgaseinlass (3) und eine Auswerteeinrichtung (13), die eine Trendkurve (K) des Spülgaszuflusses (Q) und einen Zeitpunkt (t1, t2) vorausberechnet, wenn die Trendkurve (K) einen Schwellenwert (Q1, Q2) überschreitet.

2. Überdruckkapselung nach Anspruch 1, **dadurch gekennzeichnet, dass** die Auswerteeinrichtung (13) eine Restlaufzeit (t1-t0, t2-t0) bis zu dem vorausberechneten Zeitpunkt (t1, t2) ermittelt.

3. Überdruckkapselung nach Anspruch 1 oder 2, **dadurch gekennzeichnet, dass** die Auswerteeinrichtung (13) den Spülgaszufluss (Q) kontinuierlich ermittelt.

4. Überdruckkapselung nach Anspruch 1 oder 2, **dadurch gekennzeichnet, dass** die Auswerteeinrichtung (13) den Spülgaszufluss (Q) diskontinuierlich in aufeinanderfolgenden Zeitabständen jeweils für eine vorgegebene Messdauer (Δt) ermittelt.

5. Überdruckkapselung nach einem der Ansprüche 1 bis 3, **dadurch gekennzeichnet, dass** die Auswerteeinrichtung (13) ein von der der Steuereinrichtung (11) separates Gerät ist.

6. Überdruckkapselung nach einem der vorangehenden Ansprüche, **dadurch gekennzeichnet, dass** die Auswerteeinrichtung (13) Bestandteil der Steuereinrichtung (11) ist.

7. Überdruckkapselung nach einem der vorangehenden Ansprüche, **dadurch gekennzeichnet, dass** die Auswerteeinrichtung (13) eine Funkschnittstelle (16) zur drahtlosen Versendung des vorausberechneten Zeitpunktes (t1, t2) aufweist.

8. Überdruckkapselung nach einem der vorangehenden Ansprüche, **dadurch gekennzeichnet, dass** das Gehäuse (2) einen Spülgasauslass (4) mit einem Auslassventil (8) aufweist und dass die Auswerteeinrichtung (13) zur Ermittlung des Trends (K) des Spülgaszuflusses (Q) nur den bei geschlossenem Auslassventil (8) von dem Durchflussmesser (7) erfassten Spülgaszufluss (Q) heranzieht.

9. Überdruckkapselung nach einem der Ansprüche 1 bis 7, **dadurch gekennzeichnet, dass** ein weiterer Durchflussmesser (9) vorhanden ist, der die das Gehäuse (2) über einen Spülgasauslass (4) verlassende Spülgasmenge misst, und dass die Auswerteeinrichtung (13) dazu ausgebildet ist, bei der Ermittlung des Trends (K) des Spülgaszuflusses (Q) von diesem die das Gehäuse (2) über einen Spülgasauslass (4) verlassende Spülgasmenge zu subtrahieren.

## Claims

1. Overpressure encapsulation with a housing (2), which is connected to a flushing gas source (5) by way of a flushing gas inlet (3), with an inlet valve (6) arranged between the flushing gas source (5) and the flushing gas inlet (3), with a pressure gauge or pressure switch (10) monitoring the internal pressure in the housing (2) and with a control device (11) which is embodied to control the inlet valve (6) in order to maintain a target internal pressure in the housing (2), **characterised by** a flow meter (7) detecting the flushing gas supply (Q) between the flushing gas source (5) and the flushing gas inlet (3) and an evaluation device (13), which precalculates a trend curve (K) of the flushing gas supply (Q) and a time instant (t1, t2), if the trend curve (K) exceeds a threshold value (Q1, Q2).

2. Overpressure encapsulation according to claim 1, **characterised in that** the evaluation device (13) determines a residual term (t1-t0, t2-t0) up to the precalculated time instant (t1, t2).

3. Overpressure encapsulation according to claim 1 or 2, **characterised in that** the evaluation device (13) determines the flushing gas supply (Q) continuously.

4. Overpressure encapsulation according to claim 1 or 2, **characterised in that** the evaluation device (13) determines the flushing gas supply (Q) discontinuously in consecutive time intervals in each case for a predetermined measuring duration (Δt).

5. Overpressure encapsulation according to one of claims 1 to 3, **characterised in that** the evaluation device (13) is a device which is separate from the control device (11).

6. Overpressure encapsulation according to one of the preceding claims, **characterised in that** the evaluation device (13) is an integral part of the control device (11).

7. Overpressure encapsulation according to one of the preceding claims, **characterised in that** the evaluation device (13) has a radio interface (16) for wirelessly sending the precalculated time instant (t1, t2).

8. Overpressure encapsulation according to one of the preceding claims, **characterised in that** the housing (2) has a flushing gas outlet (4) with an outlet valve (8) and that in order to determine the trend (K) of the flushing gas supply (Q), the evaluation device (13) only uses the flushing gas supply (Q) detected by the flow meter (7) when the outlet valve (8) is closed.

9. Overpressure encapsulation according to one of claims 1 to 7, **characterised in that** a further flow meter (9) is present, which measures the flow gas quantity leaving the housing (2) by way of a flushing gas outlet (4), and that the evaluation device (13) is embodied to subtract the flushing gas quantity leaving the housing (2) by way of a flushing gas outlet (4) when the trend (K) of the flushing gas supply (Q) is determined herefrom.

## Revendications

1. Encapsulation à surpression comprenant une enveloppe (2), qui est raccordée à une source (5) de gaz de balayage par une entrée (3) de gaz de balayage, comprenant une vanne (6) d'entrée montée entre la source (5) de gaz de balayage et l'entrée (3) de gaz de balayage, comprenant un manomètre ou un manostat (10) contrôlant la pression intérieure dans l'enveloppe (2) et comprenant un dispositif (11) de commande, qui est constitué pour commander la vanne (6) d'entrée afin de maintenir une pression intérieure de consigne dans l'enveloppe (2), **caractérisée par** un débitmètre (7), détectant l'afflux (Q) de gaz de balayage, entre la source (5) de gaz de balayage et l'entrée (3) de gaz de balayage et par un dispositif (13) d'exploitation, qui calcule à l'avance une courbe (K) de tendance de l'afflux (Q) du gaz de balayage et un instant (t1, t2), où la courbe (K) de tendance dépasse une valeur (Q1, Q2) de seuil.

2. Encapsulation à surpression suivant la revendication 1, **caractérisée en ce que** le dispositif (13) d'exploitation détermine un temps (t1-t0, t2-t0) restant à courir jusqu'à l'instant (t1, t2) calculé à l'avance.

3. Encapsulation à surpression suivant la revendication 1 ou 2, **caractérisée en ce que** le dispositif (13) d'exploitation détermine l'afflux (Q) de gaz de balayage en continu.

4. Encapsulation à surpression suivant la revendication 1 ou 2, **caractérisée en ce que** le dispositif (13) d'exploitation détermine l'afflux (Q) de gaz de balayage en discontinu dans des intervalles de temps successifs respectivement pendant une durée (Δt) donnée à l'avance.

5. Encapsulation à surpression suivant l'une des revendications 1 à 3, **caractérisée en ce que** le dispositif (13) d'exploitation est un appareil distinct du dispositif (11) de commande.

6. Encapsulation à surpression suivant l'une des revendications précédentes, **caractérisée en ce que** le dispositif (13) d'exploitation est une partie constitutive du dispositif (11) de commande.

7. Encapsulation à surpression suivant l'une des revendications précédentes, **caractérisée en ce que** le dispositif (13) d'exploitation a une interface (16) radio pour l'envoi sans fil de l'instant (t1, t2) calculé à l'avance.

8. Encapsulation à surpression suivant l'une des revendications précédentes, **caractérisée en ce que** l'enveloppe (2) a une sortie (4) de gaz de balayage ayant une vanne (8) de sortie et **en ce que** le dispositif (13) d'exploitation tire parti, pour la détermination de la tendance (K) de l'afflux (Q) de gaz de balayage, seulement de l'afflux (Q) de gaz de balayage détecté par le débitmètre (7) alors que la vanne (8) de sortie est fermée.

9. Encapsulation à surpression suivant l'une des revendications 1 à 7, **caractérisée en ce qu'**il y a un autre débitmètre (9), qui mesure la quantité de gaz de balayage quittant l'enveloppe par une sortie (4) de gaz de balayage, et **en ce que** le dispositif (13) d'exploitation est constitué pour, lors de la détermination de la tendance (K) de l'afflux (Q) de gaz de balayage, déduire de celui-ci la quantité de gaz de balayage quittant l'enveloppe (2) par une sortie (4) de gaz de balayage.
